# FASCICULE DE BREVET EUROPEEN

(11) **EP 0 767 323 B1**
(45) Date de publication et mention de la délivrance du brevet: **17.11.1999**
(21) Numéro de dépôt: 96402042.4
(22) Date de dépôt: 26.09.1996
(51) Int. Cl.: F16H 7/00, F16H 25/20

(54) **Vérin de positionnement à vis et réducteur**
Schraubstellvorrichtung mit Reduktionsgetriebe
Positioning screw jack with gear reducer

(30) Priorité: 02.10.1995 FR 9511556
(43) Date de publication de la demande: 09.04.1997
(73) Titulaire: MICRO CONTROLE SA, 91006 Evry Cédex (FR)
(72) Inventeur: Durand, Eric, 45200 Amilly (FR)
(74) Mandataire: Bonnetat, Christian

(56) Documents cités:
- DE-A- 2 513 004
- FR-A- 451 716
- FR-A- 2 545 624

## Description

La présente invention concerne un vérin de positionnement à vis et réducteur.

On connaît déjà des vérins de positionnement comportant un réducteur entraîné par un moteur, une vis en prise avec un écrou fixe et entraînée en rotation par ledit réducteur et, généralement, un palier de guidage pour ladite vis. Dans ces vérins connus, l'arbre de sortie dudit réducteur est pourvu de son propre palier de guidage et il est nécessaire de prévoir un découplage entre le réducteur et la vis, afin d'éliminer les défauts d'alignement entre l'axe du palier du réducteur et l'axe de la vis. Il en résulte une relative complexité et la possibilité de jeux entre les différentes pièces mises en oeuvre.

La présente invention a pour objet de remédier à ces inconvénients et elle concerne un vérin de positionnement à vis et réducteur simplifié et fonctionnant sans jeux.

A cette fin, selon l'invention, le vérin de positionnement du type rappelé ci-dessus est remarquable en ce que ledit réducteur comporte un pignon de sortie rotatif entraîné à partir d'au moins un pignon satellite par l'intermédiaire d'une courroie crantée sans fin, en ce que ladite vis est solidaire dudit pignon de sortie rotatif dudit réducteur et en ce que l'extension longitudinale dudit pignon de sortie correspond au moins approximativement à la course de ladite vis.

Ainsi, grâce à la présente invention, non seulement on élimine le palier de guidage de l'arbre de sortie du réducteur, mais encore , du fait de l'entraînement du pignon de sortie rotatif par courroie crantée et du fait de la solidarisation de la vis avec ce dernier pignon, ladite vis possède, de façon limitée, un degré de liberté autour de son axe et un degré de liberté le long dudit axe . Le nombre des pièces du vérin est donc réduit, et il en est de même des jeux. Dans le vérin conforme à la présente invention, on obtient un alignement automatique entre l'axe du moteur et l'axe de la vis.

En fonctionnement, ledit pignon de sortie rotatif entraîne ladite vis en rotation, de sorte que celle-ci, engagée dans ledit écrou fixe, se déplace le long de son axe et entraîne en retour le déplacement en translation longitudinale dudit pignon de sortie rotatif par rapport à ladite courroie crantée.

Avantageusement, ledit réducteur présente la structure générale du réducteur décrit dans la demande de brevet allemand DE-A-2 513 004.

C'est ainsi que, de préférence :
- ledit réducteur comporte de plus :
   . un pignon d'entrée fixe, et
   . un porte-satellites, entraîné en rotation par ledit moteur et portant, outre ledit pignon satellite d'entraînement dudit pignon de sortie rotatif, au moins un autre pignon satellite en engagement avec ledit pignon d'entrée fixe ; et
- l'engagement entre ledit autre pignon satellite et ledit pignon d'entrée fixe est également du type à courroie crantée sans fin.

Avantageusement, le réducteur comprend deux pignons satellites agencés de façon diamétralement opposés par rapport audit pignon d'entrée fixe, et deux autres pignons satellites agencés de façon diamétralement opposée par rapport audit pignon de sortie rotatif.

En outre, ledit porte-satellites peut présenter deux bras diamétralement opposés traversés, chacun, par un axe sur lequel sont montés, de part et d'autre des bras respectifs, un pignon satellite en engagement avec ledit pignon d'entrée fixe et un autre pignon satellite en engagement avec ledit pignon de sortie rotatif.

De préférence, ledit pignon d'entrée fixe est solidaire du boîtier du réducteur et est traversé par le corps dudit porte-satellites monté sur l'arbre de sortie dudit moteur.

Selon une autre caractéristique de l'invention, ledit second pignon de sortie présente un perçage central destiné à recevoir ladite vis.

Avantageusement, ledit écrou fixe et/ou un palier de guidage pour ladite vis sont rapportés au boîtier dudit réducteur. Ils peuvent, à cet effet, former une pièce unique rapportée audit boîtier.

Le palier de guidage peut être lisse et la vis comporte alors une partie lisse coopérant avec ledit palier.

Les figures du dessin annexé feront bien comprendre comment l'invention peut être réalisée. Sur ces figures, des références identiques désignent des éléments semblables.

La figure 1 est une vue schématique d'un exemple de réalisation du vérin de positionnement conforme à l'invention.

La figure 2 est une coupe longidutinale schématique d'un mode de réalisation du vérin de positionnement de la figure 1.

La figure 3 est une vue en coupe transversale selon la ligne III-III de la figure 2.

La figure 4 est une vue en perspective éclatée d'un mode de réalisation pratique du vérin de positionnement de la figure 2.

La figure 5 est une vue en perspective éclatée, analogue à la figure 4, en ligne, ledit vérin de positionnement étant partiellement assemblé.

La figure 6 est une vue en perspective du vérin de positionnement des figures 4 et 5, complètement assemblé.

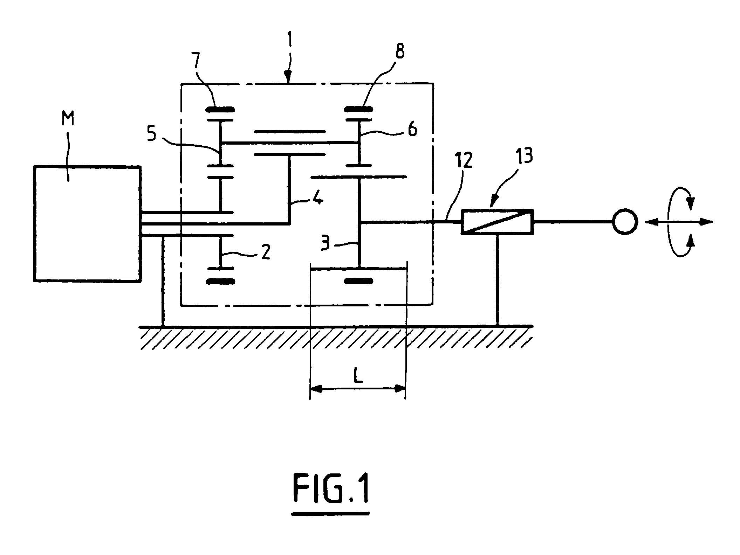

Comme on le voit sur la représentation schématique de la figure 1, le vérin de positionnement comprend un moteur d'entraînement M, notamment un moteur pas à pas, un réducteur 1 et un écrou fixe 13. Ledit réducteur 1 comporte selon l'invention :
- un pignon d'entrée fixe 2,
- un pignon de sortie rotatif 3,
- un porte-satellites 4, entraîné en rotation par le moteur M, portant, d'une part, un premier pignon satellite 5 en engagement avec le pignon d'entrée fixe 2, et, d'autre part, un second pignon satellite 6 en engagement avec le pignon de sortie rotatif 3,
- une première courroie crantée sans fin 7 entourant l'ensemble formé par le pignon d'entrée fixe 2 et le premier pignon satellite 5,
- une seconde courroie crantée sans fin 8 entourant l'ensemble formé par le pignon de sortie rotatif 3 et le second pignon satellite 6,
- les première et seconde courroies crantées 7,8 liant le mouvement du premier pignon satellite 5 au pignon d'entrée fixe 2 et du second pignon satellite 6 au pignon de sortie rotatif 3, respectivement.

La réduction provient de la différence entre le nombre des dents du pignon d'entrée fixe 2 et du pignon de sortie rotatif 3, ainsi que des pignons satellites 5 et 6.

Par ailleurs, une vis 12, solidaire dudit pignon de sortie rotatif 3, coaxialement à celui-ci, est en prise avec un écrou fixe 13. De plus, l'extension longitudinale ou largeur L dudit pignon de sortie rotatif 3 est au moins égale à la course de ladite vis 12.

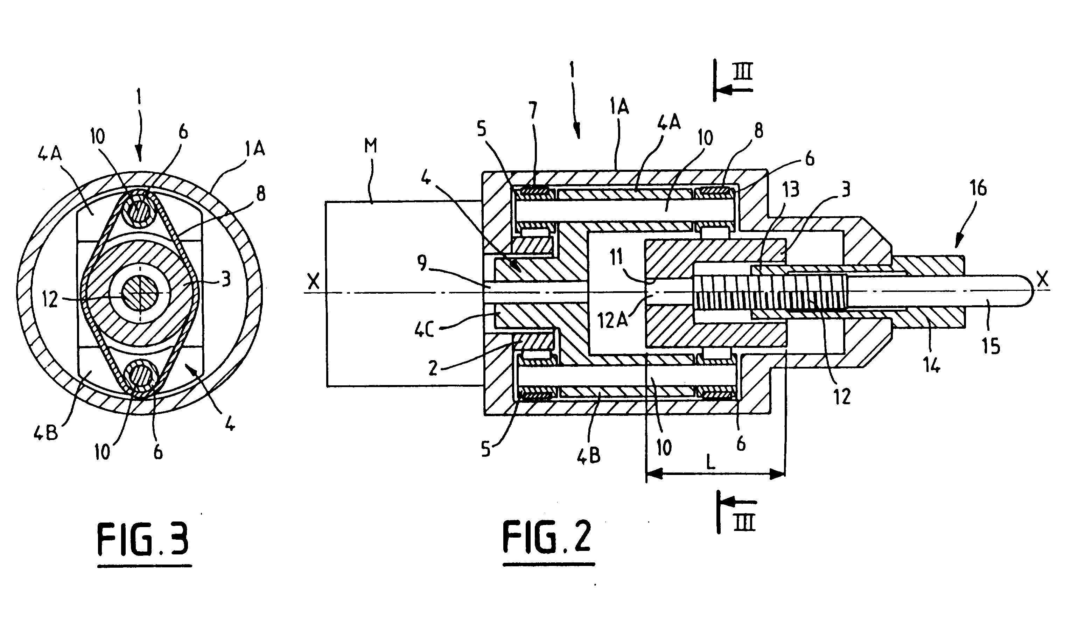

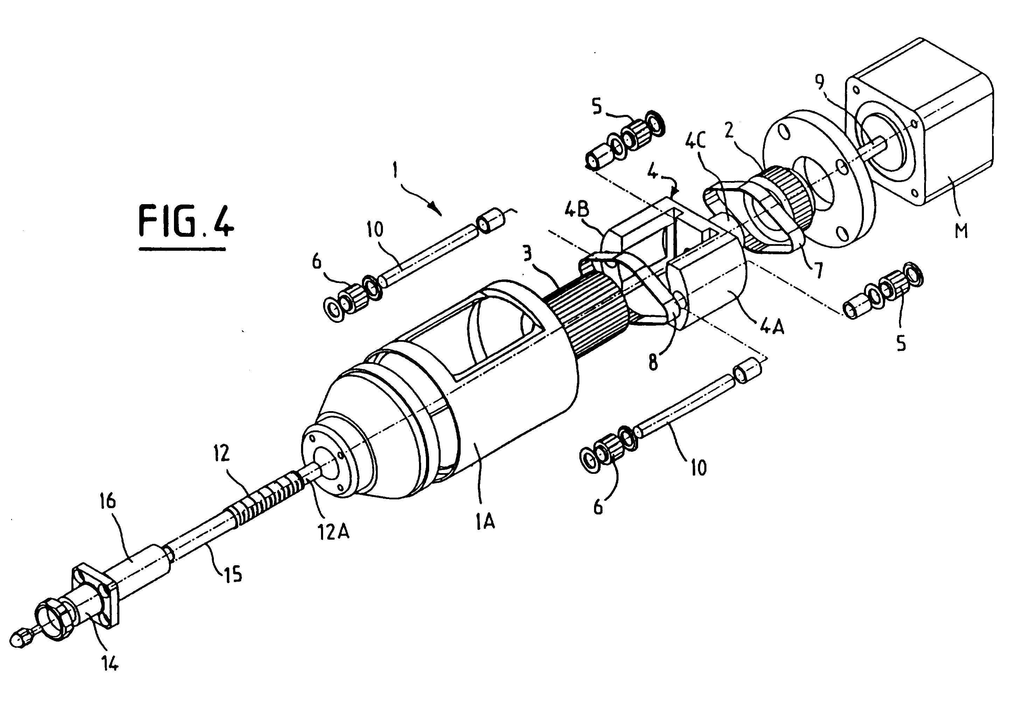

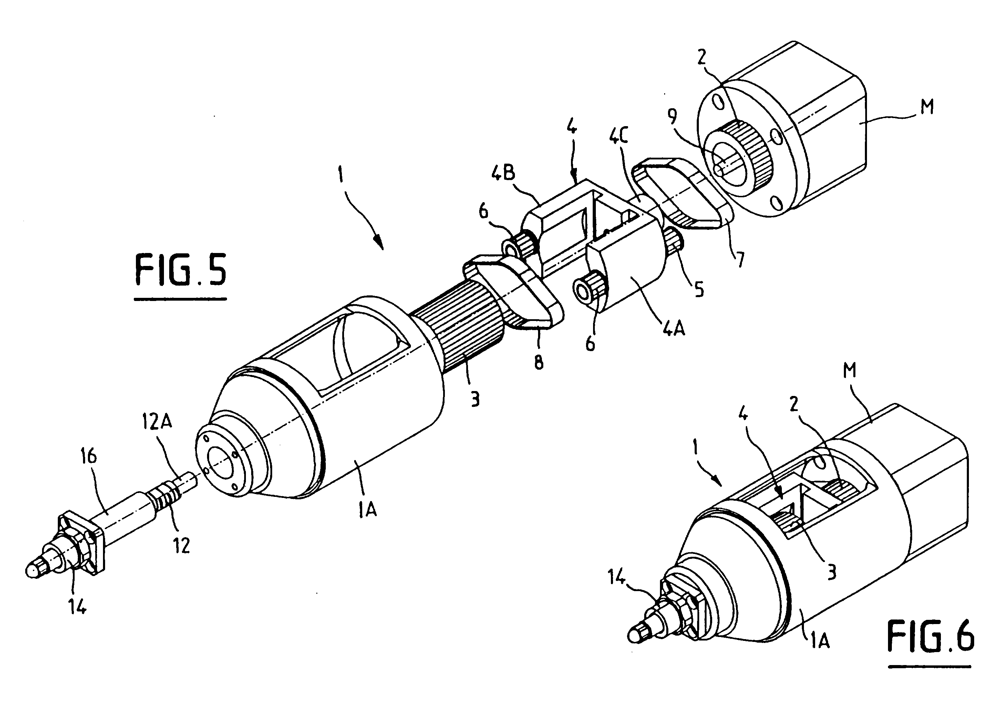

Les figures 2 à 6 (et plus particulièrement les figures 4 à 6) montrent un exemple de réalisation pratique du réducteur 1 de la figure 1. On notera que sur les figures 2 et 3, pour des raisons de clarté de dessin, les crans des courroies crantées 7 et 8 et des pignons 2,3,5 et 6 n'ont pas été représentés. Comme on le voit sur la figure 2, le porte-satellites 4 est monté rotatif sur l'arbre de sortie 9 du moteur M et présente deux bras diamétralement opposés 4A, 4B traversés, chacun, par un axe 10 sur lequel sont montés, de part et d'autre des bras respectifs, deux pignons satellites 5, agencés de façon diamétralement opposée par rapport au pignon d'entrée fixe 2, et deux pignons satellites 6, agencés de façon diamétralement opposée par rapport au pignon de sortie rotatif 3. Dans ce cas, les courroies crantées 7, 8 entourent, respectivement, l'ensemble formé par le pignon d'entrée fixe 2 et ses pignons satellites 5 et l'ensemble formé par le pignon de sortie rotatif 3 et ses pignons satellites 6.

Par ailleurs, le pignon d'entrée fixe 2 est solidaire du boîtier 1A du réducteur 1 et est traversé par le corps 4C du porte-satellites 4 monté sur l'arbre de sortie 9 du moteur M. De plus, le pignon de sortie rotatif 3 présente un perçage central 11, dans laquelle est emmanchée à force la queue 12A de la vis 12.

Cette dernière comporte de plus une partie d'extrémité lisse 15, engagée dans un palier lisse 14 fixe. L'écrou 13 et le palier lisse 14 forment une pièce unique 16, fixée sur le boîtier lA du réducteur 1.

Dans ce vérin de positionnement, le pignon d'entrée fixe 2 et le porte-satellites 4 sont coaxiaux avec l'arbre 9 du moteur M. De même, le pignon de sortie rotatif 3, la vis 12, 15 et la pièce unique 16 sont coaxiales. Les éventuels défauts d'alignement entre le porte-satellites 4 et l'arbre 9, d'une part, et le pignon 3, la vis 12,15, la pièce unique 16, d'autre part, sont compensés principalement par la courroie crantée 8, et accessoirement par la courroie crantée 7, de sorte que, en fonctionnement, le pignon d'entrée fixe 2, le porte-satellites 4, le pignon de sortie rotatif 3, la vis 12,15 et la pièce unique 16 sont coaxiaux à l'axe X-X de l'arbre 9 du moteur M.

Quand le moteur M entraîne l'arbre 9 en rotation, le mouvement de rotation est transmis au pignon de sortie 3 et à la vis 12,15, par l'intermédiaire du pignon d'entrée fixe 2, du porte-satellites 4, des pignons satellites 5 et 6 et des courroies crantées 7 et 8. La vis 12, engagée dans l'écrou fixe 13, se déplace donc en translation en effectuant une course parallèle à l'axe X-X et en étant guidée par la coopération de la partie d'extrémité lisse 15 et du palier de guidage 14 (voir les flèches sur la figure 1). Par suite, le pignon de sortie rotatif 3, solidaire de ladite vis 12, se déplace parallèlement audit axe X-X. Un tel déplacement de translation (qui se superpose à la rotation) est possible du fait que l'extension longitudinale ou largeur L dudit pignon de sortie 3, parallèlement à l'axe X-X, correspond au moins sensiblement à la course de la vis 12.

## Revendications

1. Vérin de positionnement comportant un réducteur (1) entraîné par un moteur (M) et une vis (12) en prise avec un écrou fixe (13) et entraînée en rotation par ledit réducteur (1),
caractérisé en ce que :
. ledit réducteur (1) comporte un pignon de sortie rotatif (3) entraîné à partir d'au moins un pignon satellite (6) par l'intermédiaire d'une courroie crantée sans fin ;
. ladite vis (12) est solidaire dudit pignon de sortie rotatif (3) ; et
. l'extension longitudinale (L) dudit pignon de sortie rotatif (3) correspond au moins sensiblement à la course de ladite vis (12).

2. Vérin de positionnement selon la revendication 1,
caractérisé en ce que ledit réducteur (1) comporte de plus :
. un pignon d'entrée fixe (2), et
. un porte-satellites (4), entraîné en rotation par ledit moteur (M) et portant, outre ledit pignon satellite (6) d'entraînement dudit pignon de sortie rotatif (3), au moins un autre pignon satellite (5) en engagement avec ledit pignon d'entrée fixe (2).

3. Vérin de positionnement selon la revendication 2,
caractérisé en ce que l'engagement entre ledit autre pignon satellite (5) et ledit pignon d'entrée fixe (2) est du type à courroie crantée sans fin.

4. Vérin de positionnement selon l'une quelconque des revendications 2 ou 3,
caractérisé en ce que ledit réducteur comprend deux pignons satellites (5) agencés de façon diamétralement opposés par rapport audit pignon d'entrée fixe (2), et deux autres pignons satellites (6) agencés de façon diamétralement opposée par rapport audit pignon de sortie rotatif (3).

5. Vérin de positionnement selon la revendication 4,
caractérisé en ce que ledit porte-satellites (4) présente deux bras (4A, 4B) diamétralement opposés traversés, chacun par un axe (10) sur lequel sont montés, de part et d'autre des bras respectifs, un pignon satellite (5) en engagement avec ledit pignon d'entrée fixe (2) et un autre pignon satellite (6) en engagement avec ledit pignon de sortie rotatif (3).

6. Vérin de positionnement selon l'une quelconque des revendications 2 à 5,
caractérisé en ce que ledit pignon d'entrée fixe (2) est solidaire du boîtier (1A) dudit réducteur (1) et est traversé par le corps (4C) dudit porte-satellites (4) monté sur l'arbre de sortie (9) dudit moteur (M).

7. Vérin de positionnement selon l'une quelconque des revendications 1 à 5,
caractérisé en ce que ledit pignon de sortie rotatif (3) présente un perçage central (11) destiné à recevoir ladite vis (12).

8. Vérin de positionnement selon l'une quelconque des revendications 1 à 7,
caractérisé en ce que ledit écrou fixe (13) est rapporté au boîtier (1A) dudit réducteur (1).

9. Vérin de positionnement selon l'une quelconque des revendications 1 à 8,
caractérisé en ce qu'il comporte un palier de guidage (14) pour ladite vis (12), ledit palier étant rapporté au boîtier (1A) dudit réducteur (1).

10. Vérin de positionnement selon les revendications 8 et 9, caractérisé en ce que ledit écrou fixe (13) et ledit palier de guidage (14) forment une pièce unique (16) rapportée au boîtier (1A) dudit réducteur (1).

11. Vérin de positionnement selon l'une des revendications 9 ou 10,
caractérisé en ce que ledit palier de guidage (14) est lisse et en ce que ladite vis (12) comporte une partie lisse (15) coopérant avec ledit palier de guidage (14).

## Patentansprüche

1. Positionierstellantrieb, der ein von einem Motor (M) angetriebenes Reduktionsgetriebe (1) und eine im Eingriff mit einer festen Mutter (13) befindliche und durch das Reduktionsgetriebe (1) zur Rotation angetriebene Schraube (12) umfaßt, dadurch gekennzeichnet, daß
· das Reduktionsgetriebe (1) ein rotierendes Ausgangszahnrad (3) aufweist, das ausgehend von wenigstens einem Planetenrad (6) über einen Endlos-Zahnriemen angetrieben wird;
· die Schraube (12) mit dem rotierenden Ausgangszahnrad (3) fest verbunden ist; und
· die Längsausdehnung (L) des rotierenden Ausgangszahnrades (3) wenigstens im Wesentlichen dem Weg der Schraube (12) entspricht.

2. Positionierstellantrieb nach Anspruch 1, dadurch gekennzeichnet, daß das Reduktionsgetriebe (1) außerdem aufweist:
· ein festes Eingangszahnrad (2) und
· einen Planetenradträger (4), der vom Motor (M) zur Rotation angetrieben wird und außer dem Planetenrad (6) zum Antrieb des rotierenden Ausgangszahnrades (3) wenigstens ein weiteres Planetenrad (5) im Eingriff mit dem festen Eingangszahnrad (2) trägt.

3. Positionierstellantrieb nach Anspruch 2, dadurch gekennzeichnet, daß der Eingriff zwischen dem weiteren Planetenrad (5) und dem festen Eingangszahnrad (2) von der Bauart mit Endlos-Zahnriemen ist.

4. Positionierstellantrieb nach einem der Ansprüche 2 oder 3, dadurch gekennzeichnet, daß das Reduktionsgetriebe zwei Planetenräder (5), die in Bezug auf das feste Eingangszahnrad (2) diametral gegenüber angeordnet sind, und zwei weitere Planetenräder (6) umfaßt, die in Bezug auf das rotierende Ausgangszahnrad (3) diametral gegenüber angeordnet sind.

5. Positionierstellantrieb nach Anspruch 4, dadurch gekennzeichnet, daß der Planetenradträger (4) zwei diametral gegenüberliegende Arme (4A, 4B) aufweist, durch die jeweils eine Achse (10) hindurchgeht, auf welcher beiderseits der jeweiligen Arme ein Planetenrad (5) im Eingriff mit dem festen Eingangszahnrad (2) und ein weiteres Planetenrad (6) im Eingriff mit dem rotierenden Ausgangszahnrad (3) angebracht sind.

6. Positionierstellantrieb nach einem der Ansprüche 2 bis 5, dadurch gekennzeichnet, daß das feste Eingangszahnrad (2) mit dem Gehäuse (1A) des Reduktionsgetriebes (1) fest verbunden ist und der Körper (4C) des an der Ausgangswelle (9) des Motors (M) angebrachten Planetenradträgers (4) durch es hindurchgeht.

7. Positionierstellantrieb nach einem der Ansprüche 1 bis 5, dadurch gekennzeichnet, daß das rotierende Ausgangszahnrad (3) eine zentrale Bohrung (11) aufweist, die dafür vorgesehen ist, die Schraube (12) aufzunehmen.

8. Positionierstellantrieb nach einem der Ansprüche 1 bis 7, dadurch gekennzeichnet, daß die feste Mutter (13) an das Gehäuse (1A) des Reduktionsgetriebes (1) angesetzt ist.

9. Positionierstellantrieb nach einem der Ansprüche 1 bis 8, dadurch gekennzeichnet, daß er ein Führungslager (14) für die Schraube (12) aufweist, wobei das Lager am Gehäuse (1A) des Reduktionsgetriebes (1) angesetzt ist.

10. Positionierstellantrieb nach den Ansprüchen 8 und 9, dadurch gekennzeichnet, daß die feste Mutter (13) und das Führungslager (14) ein einziges Teil (16) bilden, das am Gehäuse (1A) des Reduktionsgetriebes (1) angesetzt ist.

11. Positionierstellantrieb nach einem der Ansprüche 9 oder 10, dadurch gekennzeichnet, daß das Führungslager (14) glatt ist und daß die Schraube (12) einen glatten Teil (15) aufweist, der mit dem Führungslager (14) zusammenwirkt.

## Claims

1. Positioning jack comprising a reduction gearbox (1) driven by a motor (M) and a screw (12) in mesh with a stationary nut (13) and driven in rotation by the said reduction gearbox (1),
characterized in that:
· the said reduction gearbox (1) comprises a rotary output pinion (3) driven off at least one planet pinion (6) via an endless toothed belt;
· the said screw (12) is integral with the said rotary output pinion (3); and
· the longitudinal extension (L) of the said rotary output pinion (3) at least roughly corresponds to the travel of the said screw (12).

2. Positioning jack according to Claim 1,
characterized in that the said reduction gearbox (1) additionally comprises:
· a stationary input pinion (2) and
· a planet carrier (4), driven in rotation by the said motor (M) and bearing, apart from the said planet pinion (6) that drives the said rotary output pinion (3), at least one other planet pinion (5) in engagement with the said stationary input pinion (2).

3. Positioning jack according to Claim 2, characterized in that the engagement between the said other planet pinion (5) and the said stationary input pinion (2) is of the endless toothed belt type.

4. Positioning jack according to either one of Claims 2 and 3,
characterized in that the said reduction gearbox comprises two planet pinions (5) arranged so that they are diametrically opposed with respect to the said stationary input pinion (2), and two other planet pinions (6) arranged so that they are diametrically opposed with respect to the said rotary output pinion (3).

5. Positioning jack according to Claim 4,
characterized in that the said planet carrier (4) has two diametrically opposed arms (4A, 4B) through each of which there passes a spindle (10) on each of which spindles there are mounted, one on each side of each respective arm, a planet pinion (5) in engagement with the said stationary input pinion (2) and another planet pinion (6) in engagement with the said rotary output pinion (3).

6. Positioning jack according to any one of Claims 2 to 5,
characterized in that the said stationary input pinion (2) is integral with the housing (1A) of the said reduction gearbox (1) and has passing through it the body (4C) of the said planet carrier (4) that is mounted on the output shaft (9) of the said motor (M).

7. Positioning jack according to any one of Claims 1 to 5,
characterized in that the said rotary output pinion (3) has a central bore (11) intended to take the said screw (12).

8. Positioning jack according to any one of Claims 1 to 7,
characterized in that the said stationary nut (13) is attached to the housing (1A) of the said reduction gearbox (1).

9. Positioning jack according to any one of Claims 1 to 8, characterized in that it comprises a guide bearing (14) for the said screw (12), the said bearing being attached to the housing (1A) of the said reduction gearbox (1).

10. Positioning jack according to Claims 8 and 9, characterized in that the said stationary nut (13) and the said guide bearing (14) form a single part (16) attached to the housing (1A) of the said reduction gearbox (1).

11. Positioning jack according to either one of Claims 9 and 10,
characterized in that the said guide bearing (14) is a plain bearing and in that the said screw (12) comprises a smooth part (15) cooperating with the said guide bearing (14).
